# EUROPÄISCHE PATENTANMELDUNG

(11) **EP 4 389 525 A1**
(43) Veröffentlichungstag der Anmeldung: **26.06.2024**
(21) Anmeldenummer: 23218735.1
(22) Anmeldetag: 20.12.2023
(51) Int. Cl.: B60R 9/048, B60R 9/06, B60R 9/10

(54) **FAHRRADTRÄGER**

(30) Priorität: 20.12.2022 DE 102022134101
(71) Anmelder: Fiamma S.p.A., 21010 Cardano al Campo (VA) (IT)
(72) Erfinder: POZZI, John-David, 02-13 Singapur (SG); POZZI, Charles Philip, 20129 Milano (IT)
(74) Vertreter: Kluin Patent

(57) **Zusammenfassung**

Ein Fahrradträger zur Halterung von Fahrrädern am Heck eines Fahrzeugs, aufweisend einen Befestigungsträger, der zwei zur Befestigung an dem Fahrzeug vorgesehene Rohranordnungen umfasst, und einen an dem Befestigungsträger angelenkten, die Fahrräder tragenden Auflageträger, der eine eine Längsachse und eine Symmetrieebene, in welcher die Längsachse verläuft, aufweisende Rinnenanordnung zum Abstützen der Räder eines Fahrrads umfasst, bei dem die Rohranordnungen einem von einer Kreisform abweichenden Außenquerschnitt aufweisen, und/oder die Rinnenanordnung einen Hohlprofilabschnitt mit den folgenden Merkmalen umfasst: zwei Außenflächen, die senkrecht zur Längsachse bereichsweise konvex ausgebildet sind derart, dass alle an die konvexen Bereiche anlegbaren Außentangenten zur Symmetrieebene spitze Winkel in einem Bereich TA1 und TA2 bilden; zwei Innenflächen, die senkrecht zur Längsachse bereichsweise konkav ausgebildet sind derart, dass der Abstand von der Innenfläche zur Symmetrieebene hinzunimmt.

## Beschreibung

Die Erfindung betrifft einen Fahrradträger zur Halterung von Fahrrädern am Heck eines Fahrzeugs, aufweisend einen Befestigungsträger, der zwei zur Befestigung an dem Fahrzeug vorgesehene Rohranordnungen umfasst, und einen an dem Befestigungsträger angelenkten, die Fahrräder tragenden Auflageträger, der eine eine Längsachse und eine Symmetrieebene, in welcher die Längsachse verläuft, aufweisende Rinnenanordnung zum Abstützen der Räder eines Fahrrads umfasst.

Ein derartiger Fahrradträger ist bspw. aus DE 44 27 450 A1 bekannt. Die Rohranordnungen sind aus U-förmigen Aluminiumrohren gefertigt, die einen kreisrunden Außenquerschnitt aufweisen. Die Führungsrinnen umfassen jeweils ein V-förmiges Profil aus Vollmaterial mit ebenen Außen- und Innenflächen.

Dieser Fahrradträger ist zum Transport von bis zu vier konventionellen Fahrrädern vorgesehen, die jeweils etwa 10 bis 16 kg wiegen.

In jüngerer Zeit haben Fahrräder, die eine elektromotorische Unterstützung ermöglichen, auch "Elektrofahrräder" oder kurz "E-Bikes" genannt, an Verbreitung zugenommen. Der Vorteil dieser E-Bikes ist, dass durch die elektromotorische Unterstützung auch weniger gut konditionierte Personen größere Fahrstrecken unter elektromotorischer Unterstützung, die bspw. 50 km oder auch mehr betragen können, mit dem E-Bike absolvieren können. Auch erleichtert die elektromotorische Unterstützung wesentlich ein Bergauffahren.

Nachteilig ist bei diesen E-Bikes jedoch ihre gegenüber konventionellen Fahrrädern erheblich höhere Masse, die regelmäßig im Bereich von mindestens 20 kg oder auch deutlich darüber beträgt.

Da der aus der DE 44 27 450 A1 bekannte Fahrradträger nicht die zum Transport der E-Bikes erforderliche Tragfähigkeit aufweisen, ist es Aufgabe der Erfindung, diesen derart weiterzubilden, dass seine Tragfähigkeit auch zum Transport von zumindest zwei E-Bikes ausreicht, ohne dass hiermit eine wesentliche Erhöhung seines Eigengewichts verbunden ist.

Diese Aufgabe wird erfindungsgemäß dadurch gelöst, dass die Rohranordnungen des Befestigungsträgers einen von einer Kreisform abweichenden Außenquerschnitt aufweisen, und/oder dass die Rinnenanordnung einen Hohlprofilabschnitt mit den folgenden Merkmalen umfasst:
- zwei Außenflächen, die senkrecht zur Längsachse bereichsweise konvex ausgebildet sind derart, dass alle an die konvexen Bereiche anlegbaren Außentangenten zur Symmetrieebene spitze Winkel bilden, sowie
- zwei Innenflächen, die senkrecht zur Längsachse bereichsweise konkav ausgebildet sind derart, dass der Abstand von der Innenfläche zur jeweiligen Außenfläche zum Scheitel der Winkel zwischen den Außentangenten und der Symmetrieebene zunimmt.

Überraschend hat sich gezeigt, dass aufgrund dieser Ausgestaltung - wie bevorzugt - die Außen- und Innenflächen von Außen- und Innenprofilwänden mit Wandstärken zwischen 0,5 und 2,5 mm, vorzugsweise zwischen 1,0 und 2,0 mm, besonders bevorzugt von 1,5 mm gebildet werden können, wodurch die Hohlprofilabschnitte und damit die Rinnenanordnung trotz eines besonders geringen Eigengewichts die zum Transport von E-Bikes erforderliche Tragfähigkeit aufweist.

Weist der Profilabschnitt, wie bevorzugt, auf seiner in Benutzungsposition oberen Seite eine Breite von etwa 70 mm und eine Höhe von etwa 60 mm auf, so ist er gleichsam zur Aufnahme von Fahrradreifen einer besonders großen Breitenvariation zwischen etwa 19 mm und 81 mm geeignet.

Ferner hat sich überraschenderweise gezeigt, dass die Rohranordnung bei Wandstärken zwischen 1,00 und 4,00 mm vorzugsweise zwischen 1,50 und 3,50 mm, besonders bevorzugt zwischen 1,75 und 3,00 mm ebenfalls die für den Transport von E-Bikes erforderliche Tragfähigkeit bereitstellen, wenn diese den von einer Kreisform abweichenden Außenquerschnitt aufweisen. Dieser kann, bei einer ersten bevorzugten Weiterbildung, oval ausgebildet sein.

Ganz besonders bevorzugt ist eine Ausführungsform, bei welcher der ovale Außenquerschnitt zwei Halbkreise umfasst, die über zwei parallele Geraden miteinander verbunden sind. Es hat sich gezeigt, dass Aluminiumrohre, die einen solchen Außenquerschnitt aufweisen, bei gleicher Wandstärke eine ganz erheblich höhere Biegefestigkeit insbesondere gegenüber dessen, die parallel zu den beiden Geraden wirken, erzielen. Der Außenquerschnitt weist vorzugsweise ein Längen/Breitenverhältnis zwischen 7/6 und 2/1, besonders bevorzugt von etwa 4/3 auf.

Sind die Rohranordnungen, wie bevorzugt, U-förmig mit zwei voneinander beabstandeten Schenkeln und einem Verbindungssteg ausgebildet, so können an den freien Enden der Schenkel Befestigungseinrichtungen vorgesehen sein, über welche der Befestigungsträger an der Fahrzeugheckwand befestigbar ist. Die Verbindungsstege dienen dann vorzugsweise zur Anlenkung des Auflageträgers, sodass dieser einen durch die Länge der Schenkel bestimmten Abstand von der Heckwand des Fahrzeugs aufweist. Hierdurch lässt sich vermeiden, dass transportierte E-Bikes mit der Heckwand des Fahrzeugs in Kontakt kommen, was Beschädigungen sowohl am Fahrzeug, als auch am E-Bike hervorrufen könnte.

Zur Aufnahme von Biegemomenten, die durch den Transport von E-Bikes in die Rohranordnung eingeleitet werden, ist es von Vorteil, wenn die parallelen Geraden des Außenquerschnitts parallel zur Richtung, in der sich die Schenkel erstrecken, ausgerichtet sind. Mit anderen Worten sind die Rohranordnungen vorzugsweise derart ausgebildet, dass im montierten Zustand des Befestigungsträgers die parallelen Geraden des Außenquerschnitts der Rohranordnungen senkrecht zur Heckwand ausgerichtet sind.

Damit der Befestigungsträger universell, d. h. an Heckwände unterschiedlicher Fahrzeuge anbringbar ist, umfassen bei einer bevorzugten Ausführungsform des erfindungsgemäßen Fahrradträgers die Rohranordnungen jeweils ein erstes und ein zweites Teil, wobei die Teile zum teleskopartigen Eingriff des ersten Teils in das zweiten Teil ausgebildet und Fixiermittel vorgesehen sind, mit denen die ersten und zweiten Teile in verschiedenen Positionen relativ zueinander fixierbar sind, die sich im Abstand der jeweiligen zwei Schenkel einer Rohranordnung voneinander unterscheiden. Die Fixiermittel können Lochreihen in den ersten und zweiten Teilen umfassen, die in verschiedenen Relativpositionen der beiden Teile in Überdeckung bringbar und durch ein Schieben einer Schraube oder eines Sicherungssplintes zueinander fixierbar sind.

Es hat sich des Weiteren überraschend gezeigt, dass die Rinnenanordnungen relativ zum Eigengewicht eine besonders hohe Tragfähigkeit aufweisen, wenn die Winkel der Außentangenten zur Symmetrieebene zwischen 10° und 50°, vorzugsweise zwischen 15° und 40°, besonders bevorzugt zwischen 20° und 30° betragen. Des Weiteren ist die mit der Rinnenanordnung erzielbare Tragfähigkeit erhöht, wenn - wie ebenfalls bevorzugt - die Winkel zwischen allen an die Innenfläche der Innenwand anlegbaren Innentangenten und der Symmetrieebene zwischen 20° und 60°, vorzugsweise zwischen 25° und 50°, besonders bevorzugt zwischen 30° und 40° betragen. Aufgrund dieser Ausgestaltung weist die Rinnenanordnung trotz ressourcen- und gewichtseinsparender, dünnwandiger Bauweise eine zum Transport von E-Bikes geeignete Biege- und Torsionssteifigkeit auf.

In der Zeichnung ist - schematisch - ein Ausführungsbeispiel des erfindungsgemäßen Fahrradträgers dargestellt. Es zeigen:
- Fig. 1: den Fahrradträger mit angeklapptem Auflageträger in einer Seitenansicht gemäß Fig. 2 von rechts;
- Fig. 2: denselben Fahrradträger mit angeklapptem Auflageträger in einer Ansicht gemäß Fig. 1 von oben;
- Fig. 3: denselben Fahrradträger mit aufgeklapptem Auflageträger in einer Fig. 1 entsprechenden Seitenansicht;
- Fig. 4: denselben Fahrradträger mit aufgeklapptem Auflageträger in einer Fig. 2 entsprechenden Ansicht von oben;
- Fig. 5: einen Schnitt gemäß Schnittlinie A-A in Fig. 1 durch eine Rohranordnung sowie
- Fig. 6: einen Schnitt gemäß Schnittlinie B-B in Fig. 2 durch eine Rinnenanordnung.

Das in der Zeichnung dargestellte Ausführungsbeispiel des erfindungsgemäßen Fahrradträgers 100 umfasst einen Befestigungsträger 1, der zwei U-förmige Rohranordnungen 2, 3 mit jeweils zwei Schenkeln 4, 5 bzw. 6, 7, die jeweils über einen Verbindungssteg 8 bzw. 9 verbunden sind, aufweist. Jede der Rohranordnungen 2, 3 umfasst ein erstes Teil 10, 11 und ein zweites Teil 12, 13, wobei die ersten und zweiten Teile 10, 11; 12, 13 zum teleskopartigen Eingriff der ersten Teile 10, 11 in die zweiten Teile 12, 13 ausgebildet sind. Die ersten und zweiten Teile 10, 12 bzw. 11, 13 sind in Höhenrichtungen H relativ zueinander verschiebbar und durch Fixiermittel 14, 15 in verschiedenen Positionen relativ zueinander fixierbar, die sich im Abstand A der jeweiligen Schenkel 4, 5; 6, 7 voneinander unterscheiden. Die Fixiermittel umfassen bei dem dargestellten Ausführungsbeispiel jeweils eine Schraube, die jeweils eines der ersten Teile in einem Loch und das zugehörige zweite Teil jeweils in einem Loch einer Lochreihe durchsetzen.

An den freien Enden der Schenkel 4, 5; 6, 7 sind Befestigungseinrichtungen 16 zur Befestigung des Befestigungsträgers 1 an einer in der Zeichnung nicht dargestellten Heckwand eines Fahrzeugs dienen. Durch die teleskopartige Ausgestaltung der Rohranordnungen 2, 3 ist der Befestigungsträger 1 an unterschiedliche Befestigungssituationen bzw. an die Heckwände unterschiedlicher Fahrzeuge anpassbar.

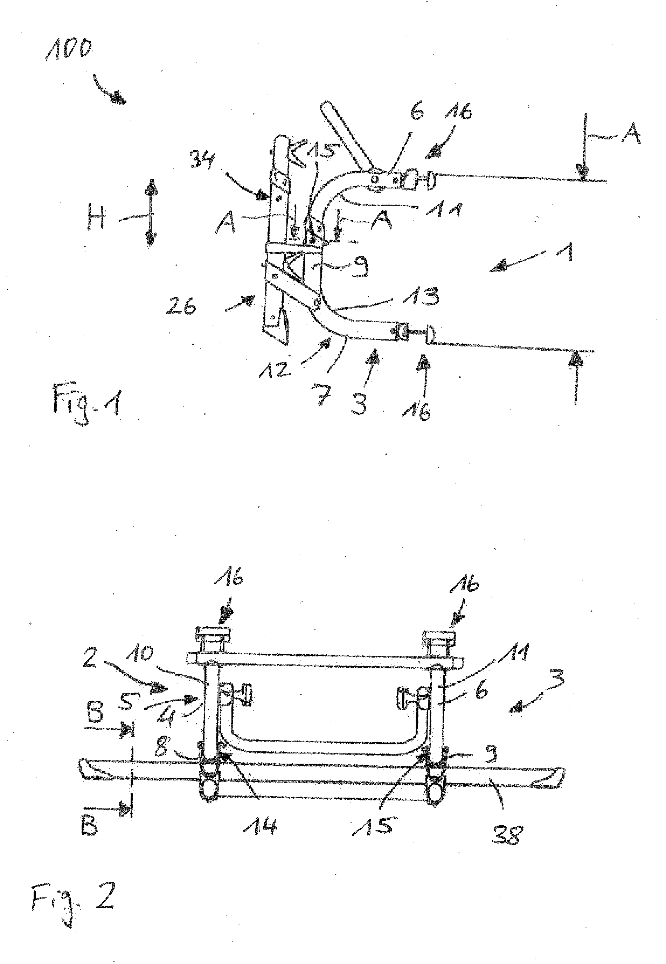

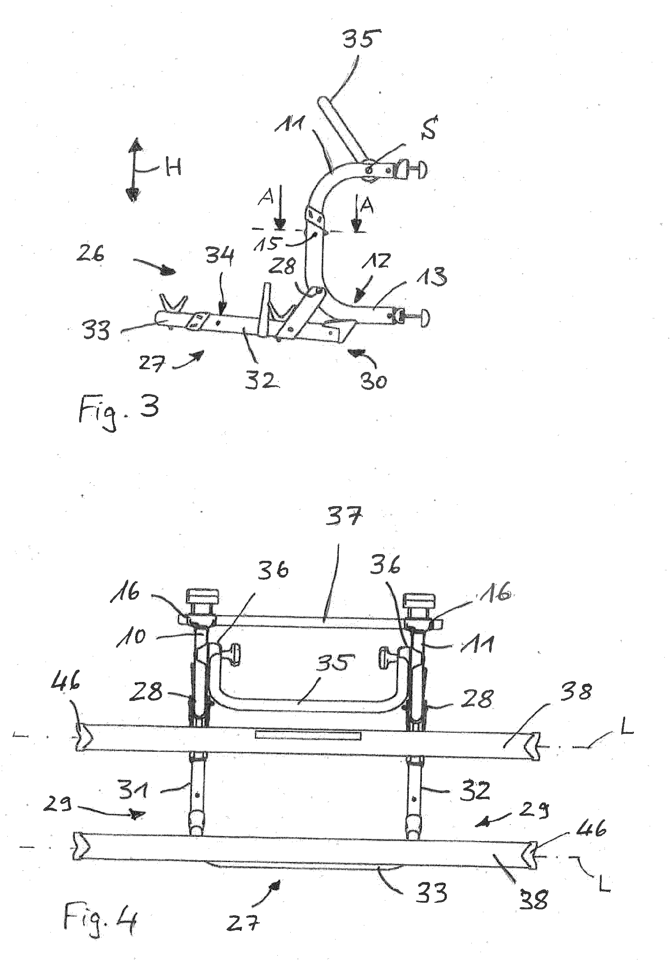

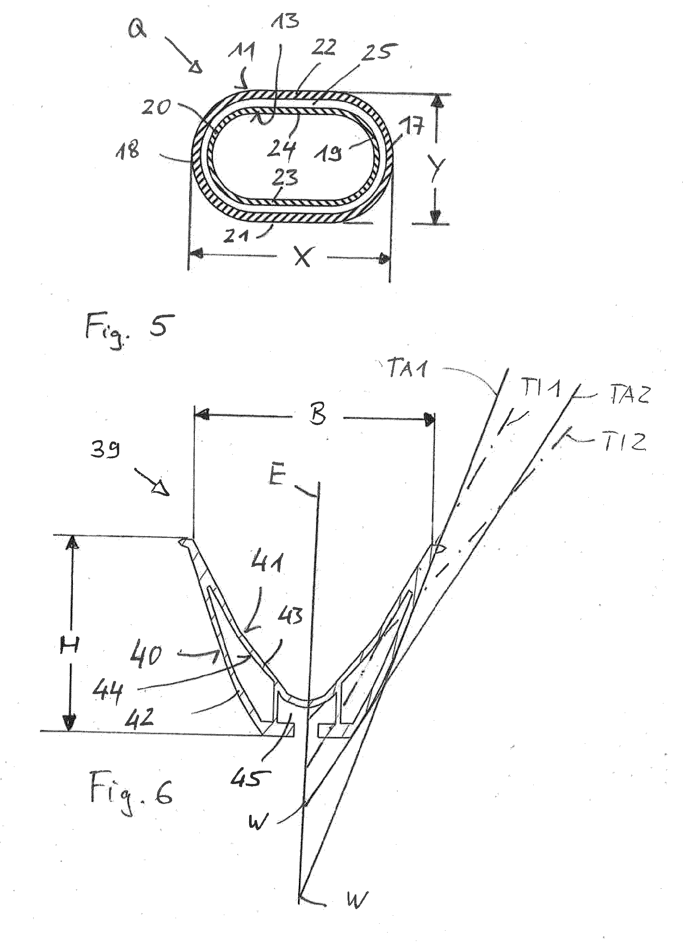

Wie in Fig. 5 erkennbar ist, die den Schnitt A-A in Fig. 1 und 3 am Beispiel der Rohranordnung 3 zeigt, weisen die ersten und zweiten Teile 11, 13 jeweils einen ovalen Außenquerschnitt Q mit zwei Halbkreisen 17, 18 bzw. 19, 20 auf, die über zwei parallele Geraden 21, 22 bzw. 23, 24 miteinander verbunden sind. Somit weist der Außenquerschnitt Q eine Länge X auf, die größer als die Breite Y ist. Das Verhältnis X/Y beträgt bei dem dargestellten Ausführungsbeispiel 4/3.

Zwischen den ersten und zweiten Teilen 11, 13 bzw. 10, 12 ist ein geringes Spiel 25 vorgesehen, welches die Relativverschiebung in Höhenrichtung H erlaubt.

Des Weiteren weist der erfindungsgemäße Fahrradträger 100 einen Auflageträger 26 auf. Er umfasst eine weitere U-förmige Rohranordnung 27, welche über Scharniere 28 mit den beiden Rohranordnungen 2, 3 des Befestigungsträgers 1 derart verbindbar ist, dass die weitere Rohranordnung 27 zwischen einer in den Fig. 1 und 2 dargestellten, angeklappten Positionen, in welcher Schenkel 29 der weiteren Rohranordnung 27 etwa parallel zu den Verbindungsstegen 8, 9 der Rohranordnungen 2, 3 verlaufen, und einer in den Fig. 3 und 4 dargestellten, aufgeklappten Transportposition verschwenkbar ist, in welcher die Schenkel 29 der weiteren Rohranordnung 27 etwa senkrecht zu den Verbindungsstegen 8, 9 verlaufen. In der Transportposition stützen sich Endbereiche 30 der Schenkel 29 jeweils am entsprechenden unteren Schenkel 7, 9 der Rohranordnungen 2, 3 ab.

Die weitere Rohranordnung 27 ist dreiteilig ausgebildet. Sie umfasst zwei parallel zueinander verlaufende Schenkelteile 31, 32, in die ein Verbindungsstegteil 33 eingeschoben ist, derart, dass es relativ zu den Schenkelteilen 31, 32 verlagerbar ist. Zur Fixierung in einer gewünschten Position sind wiederum Fixiermittel 34 vorgesehen. Diese umfassen bei dem dargestellten Ausführungsbeispiel jeweils eine Schraube, die jeweils eines der Schenkelteile in einem Loch und das zugehörige Verbindungsstegteil jeweils in einem Loch einer Lochreihe durchsetzen.

Die Schenkelteile 31, 32 und das Verbindungsstegteil 33 weisen Außenquerschnitte Q auf, die denjenigen in Fig. 5 dargestellten und im Zusammenhang mit den ersten und zweiten Teilen 11, 13 der Rohranordnung 3 beschriebenen, entsprechen. Dabei sind die Außenquerschnitte Q so gewählt, dass die zueinander parallelen Geraden, d. h. die größeren Ausdehnungen der Außenquerschnitte, sich bei den Rohranordnungen 2, 3 in Richtung der Schenkel 4, 5 bzw. 6, 7, und bei der weiteren Rohranordnung 27 im aufgeklappten, in Fig. 3 dargestellten Zustand in Höhenrichtung H erstrecken. Sämtliche Rohranordnungen sind aus Aluminiummaterial ausgebildet. Die Wandstärken der ersten Teile 10, 11 betragen zwischen 1,75 und 2,50 mm, der zweiten Teile 12, 13 zwischen 2,00 und 3,00 mm.

Die ersten Teile 10, 11 der beiden Rohranordnungen 2, 3 sind über einen U-förmigen Bügel 35 aus Rohrmaterial miteinander verbunden. Die Verbindung erfolgt über blockierbare Scharniere 36, sodass der Bügel 35 nach Aufheben der Blockade um die Achsen S der Scharniere 36 verschwenkbar ist. Er dient einerseits der Stabilisierung der ersten Teile 10, 11 relativ zueinander, andererseits der Anbringung von in der Zeichnung nicht dargestellten Haltemitteln für die mithilfe des Fahrradträgers zu transportierenden Fahrräder.

Ferner ist ein Verbindungsholm 37 vorgesehen, mittels welchen die zweiten Teile 12, 13 im Bereich der Befestigungseinrichtung 16 zwecks Stabilisierung zueinander miteinander verbunden sind.

Der Auflageträger 26 umfasst zwei Rinnenanordnungen 38, die jeweils eine Längsachse L aufweisen. Sie sind derart an der weiteren Rohranordnung 27 befestigt, dass ihre Längsachsen L parallel zueinander verlaufen.

Jede Rinnenanordnung 38 umfasst einen Hohlprofilabschnitt 39 aus Aluminiummaterial mit einer Symmetrieebene E, in welcher die Längsachse L verläuft (siehe Fig. 6). Ferner umfasst der Hohlprofilabschnitt 39 zwei symmetrisch zur Symmetrieebene E angeordnete Außenflächen 40, die senkrecht zur Längsachse L bereichsweise konvex ausgebildet sind, derart, dass alle an die konvexen Bereiche anlegbaren Außentangenten zur Symmetrieebene E spitze Winkel in einem Bereich TA1=20° und TA2=30° liegen. Sämtliche Außentangenten liegen mit anderen Worten in einem Winkelbereich zwischen TA1 und TA2 und bilden mit der Symmetrieebene E Winkelscheitel W.

Ferner umfasst der Hohlprofilabschnitt symmetrisch zur Symmetrieebene E verlaufende Innenflächen 41 auf, die senkrecht zur Längsachse L bereichsweise konkav ausgebildet sind, derart, dass der Abstand von der Innenfläche 41 zur jeweiligen Außenfläche zur Symmetrieebene E bzw. zu den Winkelscheiteln W hin zunimmt.

Die Außenflächen 40 und die Innenflächen 41 werden von Außenprofilwänden 42 und Innenprofilwänden 43 gebildet, die zumindest bereichsweise Wandstärken von etwa 1,5 mm aufweisen.

Die Innenprofilwände 43 weisen Innenwandflächen 44 auf, die entsprechend einer senkrecht zur Längsachse L konkaven Form der Innenflächen 41 eine konvexe Krümmung aufweisen. An die Innenwandflächen 44 anlegbare Innentangenten befinden sich sämtlich innerhalb eines von Innentangenten TI1 und TI2, die mit der Symmetrieebene E Winkel zwischen 30° und 40° einschließen, eingegrenzten Bereichs.

Jeder Profilabschnitt 39 weist auf seiner in Benutzungsposition (Fig. 3 und 4) oberen Seite eine Breite von etwa 70 mm und eine Höhe von etwa 60 mm auf.

Aufgrund dieser Ausbildung weist der Hohlprofilabschnitt 39 bei einer Stabilität gegen Torsion und Durchbiegung, die zum Transport von E-Bikes geeignet ist, ein vergleichsweise geringes Gewicht auf. Gleichsam ist er zur Aufnahme von Fahrradreifen einer besonders großen Breitenvariation zwischen etwa 19 mm und 81 mm geeignet.

Um den Profilabschnitt 39 an der weiteren Rohranordnung 27 montieren zu können, ist er - wiederum symmetrisch zur Symmetrieebene E - mit einer nach unten offenen C-Nut 45 versehen, in die Befestigungsmittel bspw. in Form von Kopfschrauben zur Durchführung durch Löcher in der weiteren Rohranordnung 27 einführbar sind.

Damit ein Eindringen von Verunreinigungen in Hohlräume des Hohlprofilabschnitts 39 vermieden wird, sind an beiden Enden einer jeden Rinnenanordnung 38 Endkappen 46 vorgesehen. Sie dienen auch der Reduzierung der Verletzungsgefahr an eventuellen Kanten der Längsenden der Hohlprofilabschnitte.

### Bezugszeichenliste:

- 100: Fahrradträger
- 1: Befestigungsträger
- 2: Rohranordnung
- 3: Rohranordnung
- 4: Schenkel
- 5: Schenkel
- 6: Schenkel
- 7: Schenkel
- 8: Verbindungssteg
- 9: Verbindungssteg
- 10: erstes Teil
- 11: erstes Teil
- 12: zweites Teil
- 13: zweites Teil
- 14: Fixiermittel
- 15: Fixiermittel
- 16: Befestigungseinrichtungen
- 17: Halbkreis
- 18: Halbkreis
- 19: Halbkreis
- 20: Halbkreis
- 21: Gerade
- 22: Gerade
- 23: Gerade
- 24: Gerade
- 25: Spiel
- 26: Auflageträger
- 27: weitere Rohranordnung
- 28: Schaniere
- 29: Schenkel
- 30: Endbereiche
- 31: Schenkelteile
- 32: Schenkelteile
- 33: Verbindungsstegteil
- 34: Fixiermittel
- 35: Bügel
- 36: Scharniere
- 37: Verbindungsholm
- 38: Riennenanordnungen
- 39: Hohlprofilabschnitt
- 40: Außenflächen
- 41: Innenflächen
- 42: Außenprofilwände
- 43: Innenprofilwände
- 44: Innenwandflächen
- 45: C-Nut
- 46: Endkappen

- A: Abstand
- B: Breite
- H: Höhe
- L: Längsachse
- E: Symmetrieebene
- Q: Außenquerschnitt
- S: Scharnierachse
- W: Winkelscheitel
- X: Länge
- Y: Breite

## Patentansprüche

1. Fahrradträger (100) zur Halterung von Fahrrädern am Heck eines Fahrzeugs, aufweisend
Einen Befestigungsträger (1), der zwei zur Befestigung an dem Fahrzeug vorgesehene Rohranordnungen (2, 3) umfasst,
und einen an dem Befestigungsträger (1) angelenkten, die Fahrräder tragenden Auflageträger (26), der eine eine Längsachse (L) und eine Symmetrieebene (E), in welcher die Längsachse (L) verläuft, aufweisende Rinnenanordnung (38) zum Abstützen der Räder eines Fahrrads umfasst,
**dadurch gekennzeichnet,**
**dass** die Rohranordnungen (2, 3) einem von einer Kreisform abweichenden Außenquerschnitt (Q) aufweisen, und/oder
**dass** die Rinnenanordnung (38) einen Hohlprofilabschnitt (39) mit den folgenden Merkmalen umfasst:
∘ zwei Außenflächen (40), die senkrecht zur Längsachse (L) bereichsweise konvex ausgebildet sind derart, dass alle an die konvexen Bereiche anlegbaren Außentangenten zur Symmetrieebene (E) spitze Winkel in einem Bereich TA1 und TA2 bilden;
o zwei Innenflächen (41), die senkrecht zur Längsachse (L) bereichsweise konkav ausgebildet sind derart, dass der Abstand von der Innenfläche zur Symmetrieebene (E) hinzunimmt.

2. Fahrradträger nach Anspruch 1, **dadurch gekennzeichnet, dass** die Rohranordnungen (2, 3) einen ovalen Außenquerschnitt (Q) aufweisen.

3. Fahrradträger nach Anspruch 2, **dadurch gekennzeichnet, dass** der ovale Außenquerschnitt (Q) zwei Halbkreise (17, 18, 19, 20) umfasst, die über zwei parallele Geraden (21, 22; 23, 24) miteinander verbunden sind, und vorzugsweise ein Verhältnis von Länge X zu Breite Y von 4/3 bis 7/3, besonders bevorzugt von 5/3 aufweist.

4. Fahrradträger nach einem der Ansprüche 1 bis 3, **dadurch gekennzeichnet, dass** die Rohranordnungen (2, 3) U-förmig mit zwei voneinander beabstandeten Schenkeln (4, 5; 6, 7) und einem Verbindungssteg (8; 9) ausgebildet sind.

5. Fahrradträger nach Anspruch 3 und 4, **dadurch gekennzeichnet, dass** die parallelen Geraden (21, 22; 23, 24) des Außenquerschnitts (Q) parallel zur Richtung, in der sich die Schenkel (4, 5; 6, 7) erstrecken, ausgerichtet sind.

6. Fahrradträger nach einem der Ansprüche 1 bis 5, **dadurch gekennzeichnet, dass** die Rohranordnungen (2, 3) jeweils ein erstes und ein zweites Teil (10, 12; 11, 13) umfassen, wobei die Teile zum teleskopartigen Eingriff des ersten Teils (10, 11) in das zweite Teil (12, 13) ausgebildet und Fixiermittel (14, 15) vorgesehen sind, mit denen die ersten und zweiten Teile (10, 12; 11, 13) in verschiedenen Positionen relativ zueinander fixierbar sind, die sich im Abstand (A) der jeweiligen zwei Schenkel (4, 5; 6, 7) voneinander unterscheiden, wobei die Fixiermittel (14, 15) vorzugsweise jeweils eine Schraube umfassen, die jeweils eines der ersten Teile in einem Loch und das zugehörige zweite Teil jeweils in einem Loch einer Lochreihe durchsetzen.

7. Fahrradträger nach Anspruch 6, **dadurch gekennzeichnet, dass** die Rohranordnungen (2, 3) Wandstärken zwischen 1,00 und 4,00 mm, vorzugsweise zwischen 1,50 und 3,50 mm, besonders bevorzugt von 1,75 und 3,00 mm aufweisen, weiterhin bevorzugt, dass die Wandstärken der ersten Teile (10, 11) zwischen 1,75 und 2,50 mm, der zweiten Teile (12, 13) zwischen 2,00 und 3,00 mm betragen.

8. Fahrradträger nach einem der Ansprüche 1 bis 7, **dadurch gekennzeichnet, dass** die Winkel der Außentangenten TA1, TA2 zur Symmetrieebene (E) zwischen 10° und 50°, vorzugsweise zwischen 15° und 40°, besonders bevorzugt zwischen 20° und 30° betragen.

9. Fahrradträger nach einem der Ansprüche 1 bis 8, **dadurch gekennzeichnet, dass** die Außenflächen (40) und die Innenflächen (41) von Außen- und Innenprofilwänden (42, 43) mit Wandstärken zwischen 0,5 und 2,5 mm, vorzugsweise zwischen 1,0 und 2,0 mm, besonders bevorzugt von 1,5 mm gebildet sind.

10. Fahrradträger nach Anspruch 9, **dadurch gekennzeichnet, dass** die Winkel zwischen den die Innenwandflächen (44) der Innenprofilwände (43) angelegten Innentangenten (TI1, TI2) und der Symmetrieebene (E) zwischen 20° und 60°, vorzugsweise zwischen 25° und 50°, besonders bevorzugt zwischen 30° und 40° betragen, und weiterhin vorzugsweise, dass der Hohlprofilabschnitt (39) auf seiner in Benutzungsposition oberen Seite eine Breite (B) von etwa 70 mm und eine Höhe (H) von etwa 60 mm aufweist.
